# EUROPEAN PATENT APPLICATION

(11) **EP 1 387 298 A2**
(43) Date of publication of application: **04.02.2004**
(21) Application number: 03024404.0
(22) Date of filing: 20.09.2000
(51) Int. Cl.: G06F 17/30

(54) **Method, system and program for specifying content displayed on browser**

(30) Priority: 09.11.1999 JP 31877599
(62) Divisional of application: 00308178.3
(71) Applicant: FUJITSU LIMITED, Kawasaki-shi, Kanagawa 211-8588 (JP)
(72) Inventor: Wakidani, Masaru, Oomaru Inagi-shi Tokyo (JP); Kumazawa, Takeshi, Fujitsu Limited, Kawasaki-shi Kanagawa 211-8588 (JP); Mizuno, Joe, Oomaru Inagi-shi Tokyo (JP); Ikeda, Yuuichirou, Fujitsu Limited, Kawasaki-shi Kanagawa 211-8588 (JP)
(74) Representative: Stebbing, Timothy Charles

(57) **Abstract**

Network content unable to be specified by an address is specified and reproduced. An operation conducted by a user and a content display change corresponding to this operation are registered as events and reproduced. Even on a screen of content unable to be unambiguously specified by a URL and displayable only by, e.g., user's clicking, this operation is specified in an event table, whereby it is easy to trace back to the content page even when the user wishes to redisplay it later on.

## Description

The present invention relates to a technology for specifying a page of content (e.g. a homepage in the Internet or an Intranet) of which an address is unable to be directly specified on a browser in a network.

A location of content (of a web page) is generally specified by an address known as a URL (Uniform Resource Locator) in the browser in a network such as Internet, Intranet, etc. For a homepage of, e.g., Fujitsu Limited as the present applicant, the content on the top (front) page is displayed by specifying a URL of http://www.fujitsu.co.jp.

Some of this type of Internet content cannot, however, be specified unambiguously (directly) by a URL.

For example, in a case where first content (a first web page) is displayed by specifying a given URL and second content is displayed by a user performing a special operation in the first content, the second content cannot be specified unambiguously by the above specified URL.

More specifically, if the user wishes to refer to a price of a certain article of trade, the user specifies an index page (first content) of a price list for that trade article with a URL.

The trade article can be picked up in a pull-down menu on the index page, and a price page (second content) of the article concerned is displayed by selecting a name of the article (an article number, etc.). This is a case of selecting second content as explained above. A problem in this case is that the price page can neither be specified directly by the URL nor displayed unless it is specified in the pull-down menu on the index page.

This is because the content to be displayed is dynamically changed by a CGI (Common Gateway Interface) program executed on a server-side, JAVA (RTM) applet executed on a client-side, and a variety of script languages described in HTML texts and executed.

Further, the same phenomenon as described above occurs also with content (pages) displayed in HTML text using a FRAME tag. Even when the user clicks on a link in the displayed content, and the display changes to a display of content corresponding to the specified link, the URL itself displayed in the browser address window does not change.

As explained above, a page which can be displayed only by such a procedure as [specifying URL] →[selecting in pull-down menu], is hard for the user to specify. For instance, if the user wishes to redisplay the same page later on, the price page (the second content) cannot be redisplayed on the browser unless the article name (the article number, etc.) selected in the pull-down menu is retained together with the URL.

The great majority of browsers incorporate a bookmark function for registering the URL of the content currently being displayed and capable of instantaneously accessing the registered URL on other occasions.

However, when registering the URL of the displayed content by use of the above bookmark function, as explained above, the content display that the user desires to register in the bookmark is different from the URL recognized by the browser, and hence it follows that a URL of content different from what the user intends, is registered.

Accordingly, it is required for displaying desired content that the user should perform the same operations each time for the content to be displayed, which is a lack of versatility and turns out to be a burden on the operation by the user.

It is a consideration of the present invention to provide a technology capable of easily specifying a second page of content displayed or generated by a user's operation with respect to a first page of content displayed by use of an address.

According to a first aspect of the present invention, there is provided a display control method for displaying content data on a display device, comprising:
accessing an event table recorded with an operation conducted by a user with respect to content displayed;
sequentially reading event information from said event table; and
reproducing a changed content display by executing a process based on the read event information.

The content display is provided by a server, for instance, a Web server, and the operation of the user is concluded at a terminal device which may be a personal computer for browsing the content of the Web server via the Internet.

The terminal device can be installed with any operating system (OS), for example, Windows 3.1, Windows 95, Windows NT, Windows 2000, etc. of MICROSOFT Corp. Examples of browsers that can be installed on the terminal device are Internet Explorer of MICROSOFT Corp. and Netscape Navigator of Netscape Communications Corp.

Note that the terminal device according to the present invention is limited to neither the personal computer nor the OS described above. The computer may embrace a workstation, a dedicated terminal, etc., and the OS may embrace UNIX and others.

Moreover, the type of the browser is not strictly confined to those capable of browsing files stored in the terminal device.

The present invention can be installed in the form of a program into those browsers in a plug-in format or a standalone program. This program may be provided in any form such as via the Internet, previously writing to a CD-ROM, a floppy disk and a ROM built in the terminal device, and pre-installing into a disk of the terminal device.

According to a second aspect of the present invention, there is provided a display control system for displaying content data on a display device, comprising:
a reading module reading from an event table in which is stored, as an object event, an operation conducted by a user with respect to content displayed; and
a reproduction processing module reproducing the object event registered in said event table.

Thus, an operation conducted by the user and a change in a content display which corresponds to this operation, are registered as events and reproduced. Therefore, even on a screen of content unable to be unambiguously specified by a URL and displayable only by, e.g., user's clicking, this operation can be specified in an event table, whereby it is feasible to extremely easily trace back to a content page also when desiring to redisplay content later on.

According to a third aspect of the present invention, there is provided a computer program comprising instructions executable by the computer to perform method steps for displaying content data, the method steps comprising:
reading from an event table in which is stored, as an object event, an operation conducted by a user with respect to displayed content data; and
reproducing the object event recorded in said event table.

A detailed description of an embodiment of the present invention will now be given, by way of example, with reference to the accompanying drawings, in which:
FIG. 1 is a view showing a system architecture in an embodiment of the present invention ;
FIG. 2 is a view showing a program architecture in the embodiment of the present invention;
FIG. 3 is an explanatory diagram showing an outline of a function of an event table in the embodiment;
FIG. 4 is a functional block diagram in the embodiment;
FIG. 5 is an explanatory chart (1) showing an object specifying data table in the embodiment;
FIG. 6 is an explanatory chart (2) showing the object specifying data table in the embodiment;
FIG. 7 is an explanatory chart showing an event intrinsic data table in the embodiment;
FIG. 8 is a flowchart showing a procedure of registering an action event in the embodiment;
FIG. 9 is a flowchart showing a procedure of reproducing the action event in the embodiment;
FIG. 10 is a view showing a display screen example (1) on a display device in the embodiment;
FIG. 11 is an explanatory chart (3) showing the object specifying data table in the embodiment;
FIG. 12 is a view showing a display screen example (2) on the display device in the embodiment;
FIG. 13 is a view showing a display screen example (3) on the display device in the embodiment;
FIG. 14 is an explanatory chart (4) showing the object specifying data table in the embodiment;
FIG. 15 is a view showing a display screen example (4) on the display device in the embodiment;
FIG. 16 is an explanatory chart showing an event table in the embodiment; and
FIG. 17 is a view showing a display screen example (5) on the display device in the embodiment.

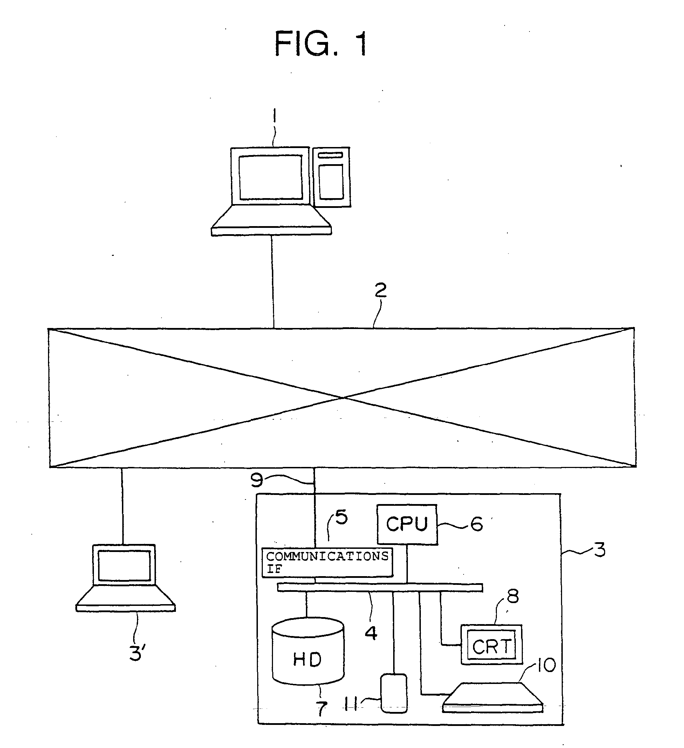

FIG. 1 shows a system architecture in an embodiment of the present invention.

Referring to FIG. 1, a Web server 1 is capable of distributing a content (of a web page) to terminal devices 3, 3' via a network 2.

The terminal device 3 has a bus 4 to which a communication interface 5 and a central processing unit (CPU) 6 are connected

The CPU 6 functions, based on a program installed into a hard disk (HD) 7, to display content data distributed from the Web server 1 on a display device 8. Note that the CPU 6 is capable of not only displaying the content data distributed from the Web server 1, but also accessing data (files) stored in the HD 7 of the terminal device 3 and displaying the content. Further, the CPU 6, to which addresses and commands are inputted through a keyboard 10 and a mouse 11, transmits these addresses and commands to the Web server 1 via the communication interface 5 and the network 2.

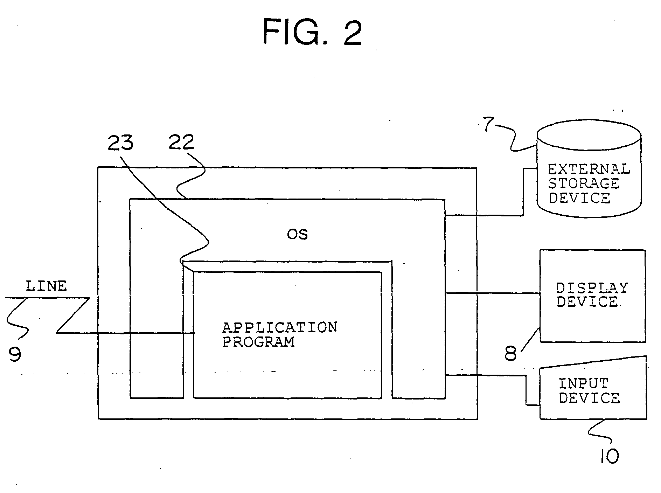

FIG. 2 shows a program architecture according to the present invention. As shown in FIG. 2, in accordance with an application program 23 installed on an OS (Operating System) 22, the content data obtained via a line 9 is displayed on the display device 8, and the command inputted through the keyboard 10 is transmitted to the line 9.

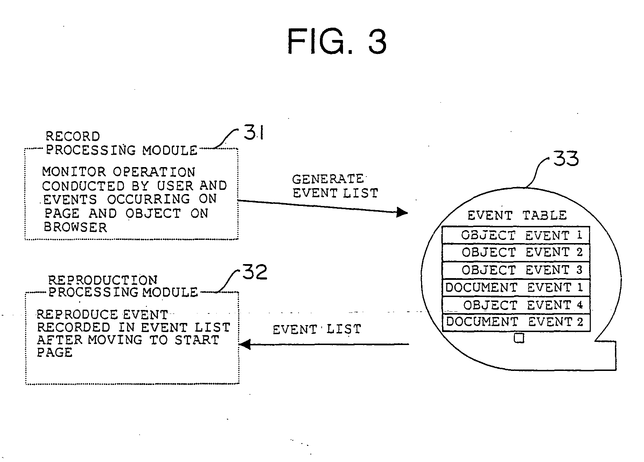

FIG. 3 is a conceptual diagram showing processes in this embodiment.

To be specific, a record processing module 31 monitors user's operations performed on the browser and events occurred on a page and an object, and thus generates an event table 33. Then, a reproduction processing module 32 reproduces the event with reference to the event table 33.

In this process, the browser is actualized by the CPU 6 executing the application program 23. Both of the record processing module 31 for monitoring the events on the browser and the reproduction processing module 32 are likewise actualized as functions of the application program 23 by the CPU 6. Moreover, the event table 33 is set within the hard disk 7, and an action event of the user's operation is reproduced by way of the reproduction processing module 32 referring to the event table 33.

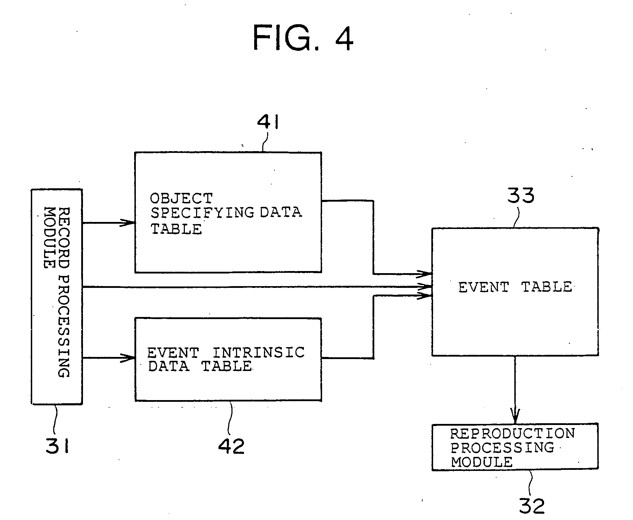

FIG. 4 shows the above program architecture in more detail. Namely, the record processing module 31 generates an object specifying data table 41 and an event intrinsic data table 42 as intermediate tables. Herein, the object specifying data table 41 stores pieces of object event data. The object event is categorized into an object event and a document event.

The object event implies mouse clicking on a button and a 'link object, changing a selection content of a selection object, changing an input character to a text input area, a transmission event in a server transmission form, an initialization event, etc.

On the other hand, the document event is defined as data for a timing adjustment when moving to another page. To be specific, when a moving operation to another page occurs as a result of the user clicking the mouse button on a link, there arises a necessity for adjusting a timing of reproducing a next object event when in a reproducing process. Therefore, the document event such as moving to a new page is retained as in the case of the object event.

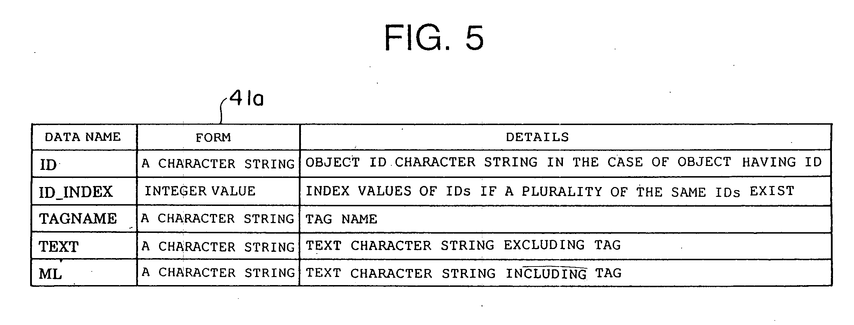

FIG. 5 shows a typical example (41a) of the object specifying data table 41.

Referring to FIG. 5, "ID" retains data in a form of a character string, and is, in the case of an object having ID, stored with an ID character string thereof. "ID_INDEX" is, if there exist a plurality of the same IDs, recorded with index values thereof.

"TAGNAME" is a tag name and records tags used for HTML (Hyper Text Mark-up Language) defined as a standard format for Web contents.

''TEXT" records a raw text character string in which the tag is removed.

"ML" records a text character string containing the tag.

The object specifying data table 41 will be explained more specifically.

An assumption is that the content be an HTML text as follows.
1: <html>
2: <head> <title> Sample Page </title> </head>
3: <body bgcolor = "#cOcOcO">
4: <font face = "Alial" size = 2>
5: <h2> Sample HTML Page </h2>
6: <img src = "/image/car.gif"> <br>
7: <span id = "next" onclick = "GoNext()"> Click this text! </span>
8: </body>
9: </html>

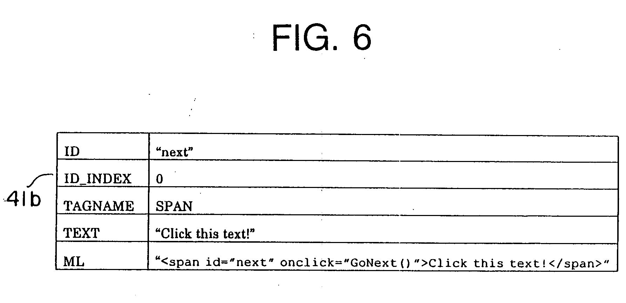

In this case, if an event occurs at a seventh line SPAN, the content of the object specifying data table 41b becomes as shown in FIG. 6.

Note that the table 41 may contain intrinsic pieces of object data (such as a NAME character string, etc. when NAME data exists) suited to categories of the objects in addition to these pieces of object basic data.

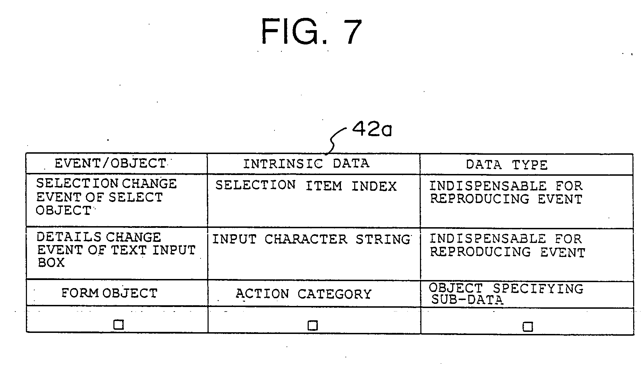

FIG. 7 shows a typical example (42a) of the content registered in the event intrinsic data table 42. As shown in FIG. 7, intrinsic data and data form (data type) are registered in every event/object. For example, in the case of an event such as a selection change based on a pull-down menu (a selection change event based on a SELECT object), a selection item index is registered as an intrinsic piece of data, and "being indispensable" is recorded as a data type.

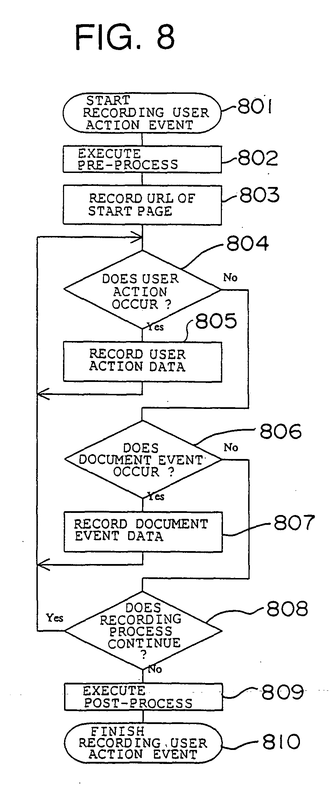

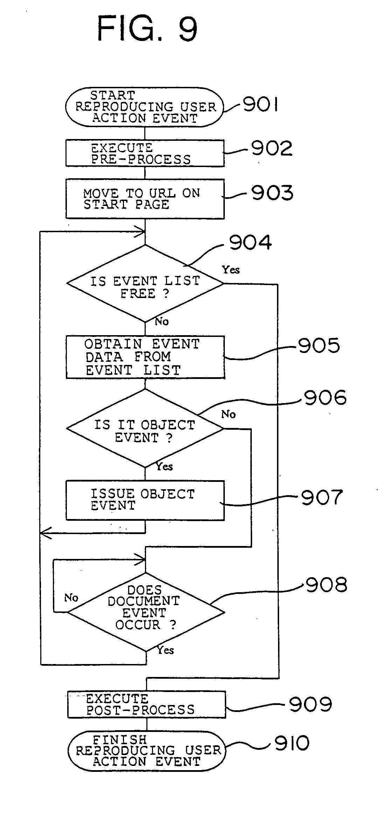

FIGS. 8 and 9 are flowcharts showing procedures of recording and reproducing a user action event.

Upon a start of recording the user action event (step 801), a pre-process is executed (802). The pre-process connoted herein is to register an event handler of each object when starting the record of the user action in order to monitor the event with respect to the object within the Web page. This event handler embraces a mouse click handler for the button and the link object, a selection change handler for the selection object, a change handler for a text box object, and a transmission/reset handler for a FORM object.

Note that registrations of those handlers are deleted as a post-process after finishing the record (809).

Upon a completion of the pre-process, the URL of the start page is recorded in the event table (803).

Next, the CPU 6 monitors an interrupt process from operations of the keyboard 10 and the mouse 11, and thus judges whether the user action occurs or not (804). Herein, if the user action occurs, the CPU 6 registers action data thereof in the event table 33.

Subsequently, the CPU 6 monitors whether or not a document event corresponding to the user action occurs (806), and, if occurred, registers this document event in the event table 33.

Whereas if the document event does not occur, the CPU 6 judges whether the recording process should continue or not by detecting whether the user has completed operations for the record. The CPU 6, when judging that it should not continue, executes the post-process described above and finishes the process concerned (808 to 810).

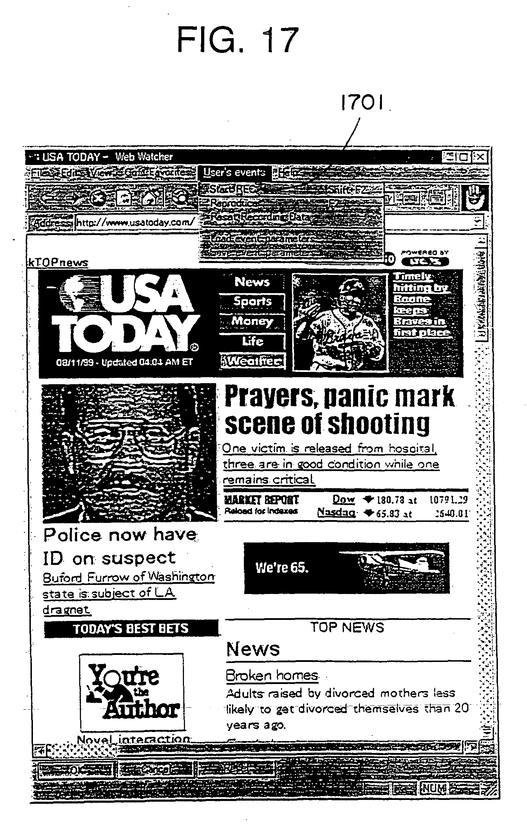

Incidentally, the start of the recording process (801) and the end of the recording process (808) in the event table in FIG. 8, are based on each of the indications by the user' s operations on a menu illustrated in FIG. 17. The recording process is started by selecting a menu item 1701 [Start REC], and a display of this menu item, 1701 is changed to [End REC]. Thereafter, the recording process is ended by choosing the menu item 1701 [End REC].

In the case of the reproduction (FIG. 9), to begin with, when the user indicates the start of the reproduction (901),the CPU 6 executes the same process as the pre-process (802) in FIG. 8, and thereafter displays the URL of the start page (903) . Herein, the CPU 6 searches for the event table 33 and judges whether or not there is an event item (904). Then, if the event exists, the CPU 6 obtains event data from the event table 33 (905).

If this piece of event data is an object event, the CPU 6 gives an indication to issue the object event (906, 907). On the other hand, the CPU 6 monitors whether or not an object event corresponding to this object event occurs (908), and, if finishing it, executes a next event item. In the case of thus executing all the event items within the event table 33, the CPU 6 comes to an end of processing via the post-process (909, 910).

Note that there may be taken a mode in which a plurality of event tables 33 are created, data (such as names, etc.) for identifying the respective tables 33 are given to and retained in these tables 33, the user is, after a desired content (page) has been displayed, made to select the identification data corresponding to a desired event table 33, and the reproducing process is executed based on the selected event table 33.

Next, a specifying procedure in the case of examining device specifications of a personal computer from a homepage of a maker and a procedure of generating the event table 33, will be explained by way of a more specific embodiment.

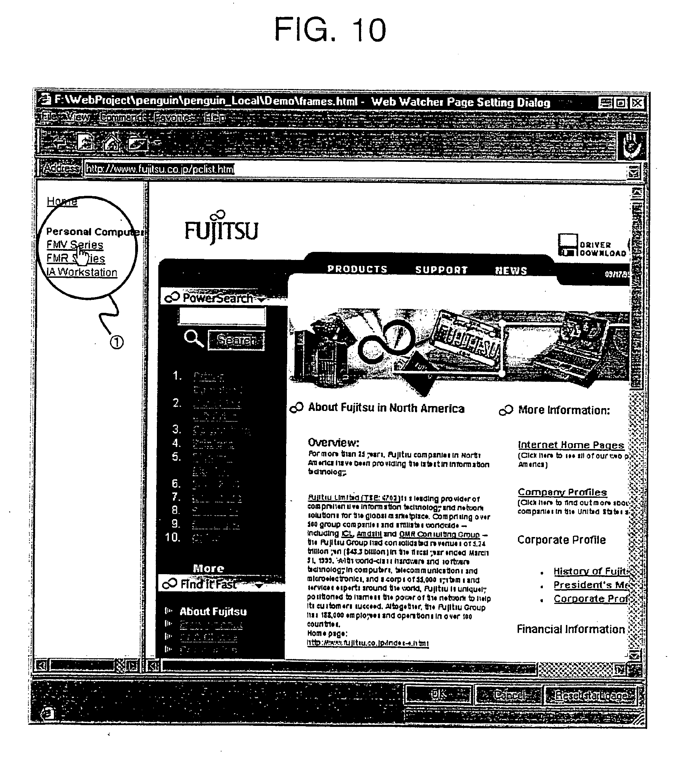

FIG. 10 shows a screen display example (first content) of a top page for examining the specifications of the personal computers available from FUJITSU LIMITED.

This page can be displayed by inputting [http://www.fujitsu.co.jp/pclist.htm] to an item of [Address].

An HTML source text on a segmented screen on the left side displayed ors this page, is described as follows:
1: <html>
2: <head>
3: </head>
4: <body>
5: <nobr>
6: <font face = "Arial">
7: <a href = ''Title.htm" target = "Right''> Home </a> <p>
8: <small> <b> Personal Computer </b> </small> <br>
9: <a href ="fmvtable.html" target = "Right">FMV Series </a> <br>
10: <a href ="fmtable.html" target = "Right">FMR Series </a> <br>
11: <a href ="iawtable.html" target = "Right">IA Workstation </a> <br>
12: </font>
13: </nobr>
14: </body>
15: </html>

In the list given above, it is assumed that the user clicks on [FMV Series] in a ninth line by manipulating the mouse 11 (see the spot pinpointed by ① in FIG. 10).

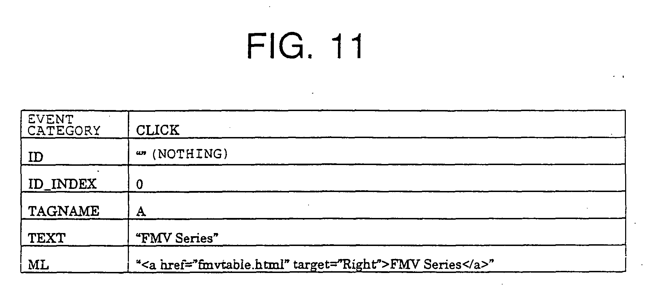

The click events described above occur, thereby generating the object specifying data table 41a as shown in FIG. 11. The item of event category herein is registered with [CLICK] because of clicking by manipulating the mouse, and [A] implying [<A href=] as a link format is registered in the item of TAGNAME. Further, [FMV series] displayed on the display screen in FIG. 10 is registered in the item of TEXT, and [<a href ="fmvtable.html" target = "Right">FMV Series </a> <br>] containing the tag is registered in the item of ML .

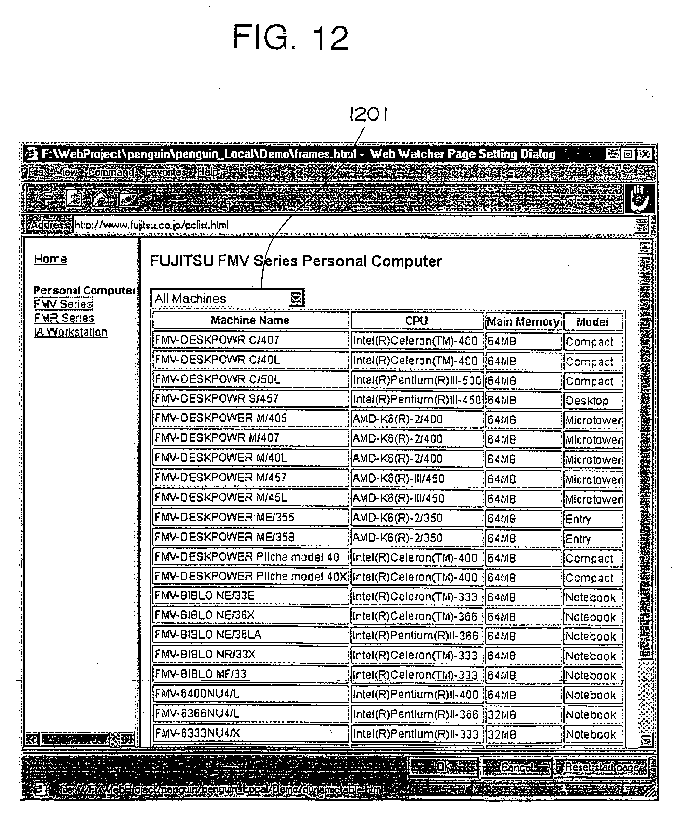

When the user clicks, the display on the screen of the display device 8 changes as shown in FIG. 12.

On this screen, the index screen on the left side has no change, while the display on the right-side screen changes to a list of machines categorized under [FMV Series] clicked before.

In this display screen in FIG. 12, the user is unable to directly specify, as a URL, the machine list displayed in a right-side window. Namely, the problem is that the machine list displayed in the right-side window can be displayed only by clicking on [FMV Series] in the left-side index display window.

At a stage where the page of the machine list is displayed in the right-side window, [Navigate Complete] indicating a completion of the document event is recorded in the event table 33a.

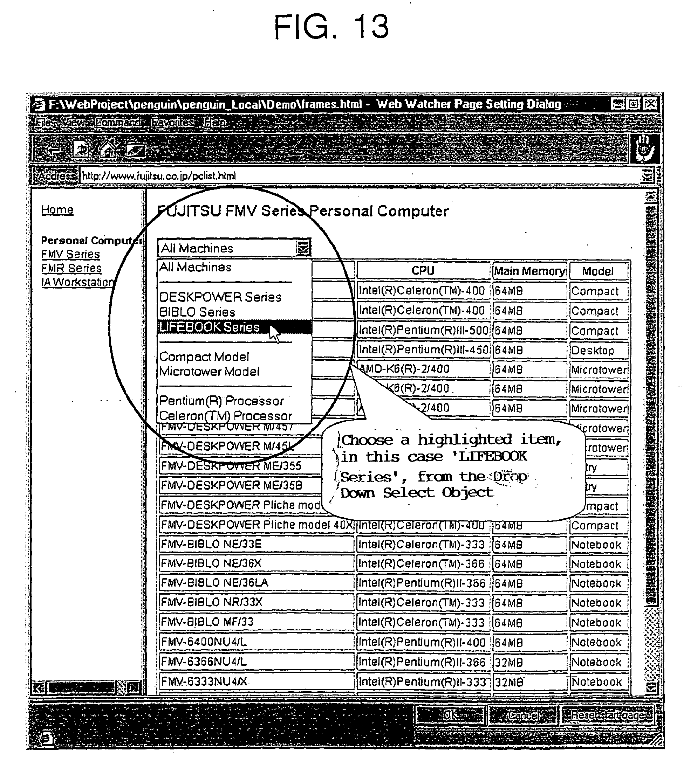

Next, the user, as shown in FIG. 13, selects [LIFEBOOK Series] by clicking on a pull-down menu 1201 displayed in the right-side window.

An HTML source text of the pull-down menu at that time is described as follows:
1: <P> <SELECT ID = cboFilterMachine onchange = "OnChangecboFilterMachine ()">
2: <OPTION VALUE = all SELECTED > All Machines
3: <OPTION> ----------------------
4: <OPTION VALUE = deskpower > DESKPOWER Series
5: <OPTION VALUE = biblo > BIBLO Series
6: <OPTION VALUE = lifebook > LIFEBOOK Series
7: <OPTION> -----------------------
8: <OPTION VALUE = compact > Compact Model
9: <OPTION VALUE = microtower > Microtower Model
10: <OPTION> ----------------------
11: <OPTION VALUE = pentium > Pentium (R) Processor
12: <OPTION VALUE = celeron > Celeron(TM) Processor
13: </SELECT>

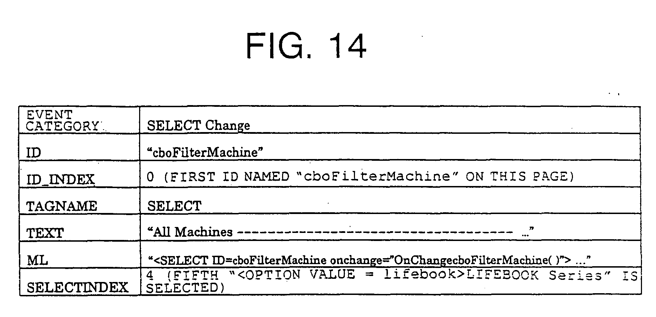

FIG. 13 shows a state where [LIFEBOOK Series] in the sixth line of this list is selected. This sort of selection event is registered in the object specifying data table as shown in FIG. 14.

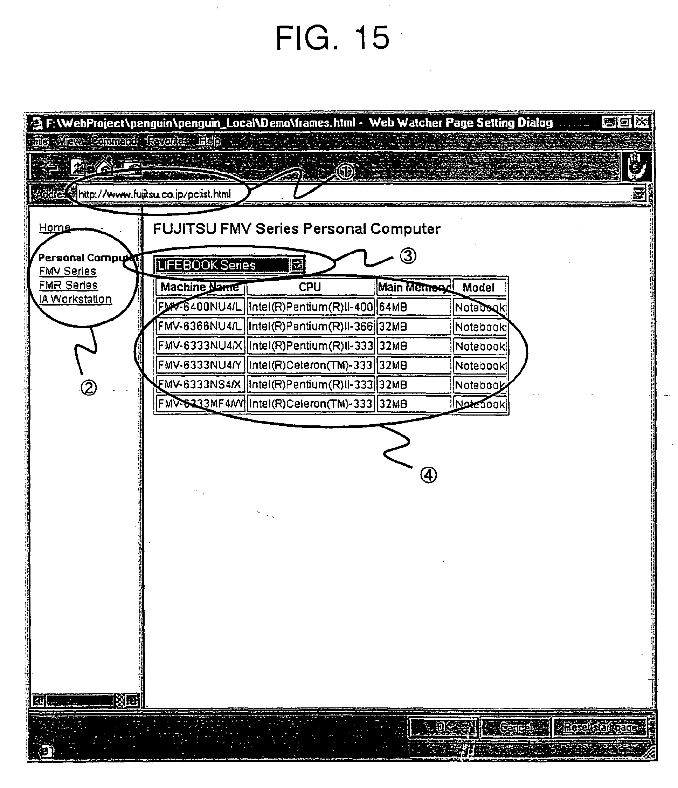

With the selection of [LIFEBOOK Series] in the pull-down menu in FIG. 13, the display in the left-side window on the screen changes as shown in FIG. 15 (a second content).

Through such a series of operations, the user is able to browse the required specifications of the machines coming under [LIFEBOOK Series].

Herein, as shown in FIG. 15, the list (a list ④ displayed in the right-side window), desired by the user, of the machines of [LIFEBOOK Series] can be displayed with a prerequisite of, at first, ① designating the URL, ② selecting a desired machine series on the index screen (the right-side window), and ③ picking up a group in that machine series. During this series of operations, the URL displayed on the browser does not change as indicated by ①.

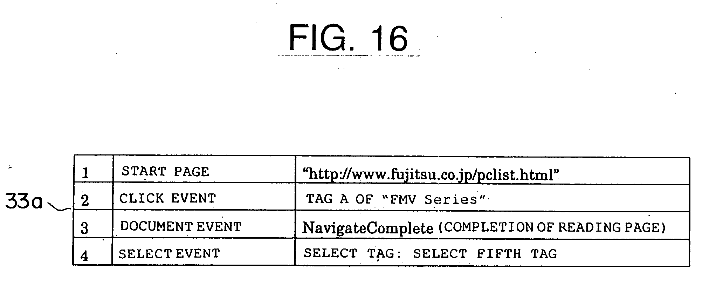

The series of operations ①~④ described above are registered in the form of the event table 33a as shown in FIG. 16, which has been generated from the object specifying data table in this embodiment.

The event table 33a is registered by way of the user giving an arbitrary name (e.g., [LIFEBOOK Series Specification List]) to the bookmark.

Then, the user, when wishing to know later on about the specifications of [LIFEBOOK] in [FMV Series], e.g., a type of CPU, a memory capacity, etc., simply may select [LIFEBOOK Series Specification List] in the bookmark.

The CPU 6 reads the event table 33a registered on the hard disk 7, and sequentially executes the items registered in the event table 33a.

To be more specific, in the case of the event table 33a shown in FIG. 16, the CPU 6, to start with, reads the display on the screen shown in FIG. 10 by specifying the start page (http://www.fujitsu.co.jo/pclist.html).

Next, the CPU 6 executes a click event of clicking on [FMV Series] on the index screen in the left-side window. The machine list as shown in FIG. 12 is thereby displayed in the right-side window.

Subsequently, the CPU 6 monitors the document event and, waiting for a completion of reading the above machine list, executes a select event. This select event is a process of automatically selecting a fifth select tag in the pull-down menu.

With this process, the screen shown in FIG. 15 is automatically reproduced.

Note that the source text shown in FIG. 15 has been explained as a text in the HTML format in the embodiment discussed above. The source text may, as a matter of course, take the XML or SGML format.

The document event according to an embodiment of the invention enables the object event to be executed at a certain timing by absorbing a difference in time expended for transferring the content data due to loads on the network and the server and also a difference in processing time taken for displaying the received content data.

It is to be noted that the system including both the record processing module for registering the event table and the reproduction processing module for reproducing the content display by use of the event table registered, has been exemplified in the embodiment of the present invention, however, the present invention is not limited to this system. The content display can be reproduced by reading an event table created on other systems on condition that at least the reproduction processing module is provided.

## Claims

1. A display control method for displaying content data on a display device, comprising:
accessing an event table recorded with an operation conducted by a user with respect to content displayed;
sequentially reading event information from said event table; and
reproducing a changed content display by executing a process based on the read event information.

2. A display control method for displaying content data on a display device, comprising:
specifying a piece of storage location information of the content data;
receiving the content data indicated by the specified storage location information;
displaying the received content data;
sequentially reading the event information corresponding to the specified storage location information; and
executing a process based on the read event information with respect to the content data to be displayed.

3. A display control method according to claim 1 or 2, wherein the content data are received from another system by accessing via a network.

4. A display control system for displaying content data on a display device, comprising:
a reading module reading from an event table in which is stored, as an object event, an operation conducted by a user with respect to content displayed; and
a reproduction processing module reproducing the object event registered in said event table.

5. A display control system according to claim 4, wherein said event table stores, as a document event, a change in the content display on said display device which occurs corresponding to the object event, and
said reproduction processing module executes a process based on the object event and the document event which have been registered in said event table.

6. A display control system according to claim 5, wherein the document event prescribes a completion of change in the content display.

7. A display control system according to claim 4, 5 or 6, wherein the object event is composed of information indicating details of the operation conducted by the user and information indicating details of the content operated.

8. A display control system according to any of claims 4 to 7, wherein the content is received from another system by accessing via a network.

9. A computer program comprising instructions executable by the computer to perform method steps for displaying content data, the method steps comprising:
reading from an event table in which is stored, as an object event, an operation conducted by a user with respect to displayed content data; and
reproducing the object event recorded in said event table.

10. A computer program according to claim 9, wherein the object event is composed of information indicating details of the operation conducted by the user and information indicating details of the content displayed.

11. A computer program according to claim 9 or 10, wherein the object event prescribes a completion of change in the content display.

12. A computer program according to any one of claims 9, 10 or 11, wherein the content data are received from other system by accessing via a network.

13. A storage medium readable by a computer on which is stored the program according to any of claims 9 to 12.
